# EUROPEAN PATENT SPECIFICATION

(11) **EP 0 571 215 B1**
(45) Date of publication and mention of the grant of the patent: **15.07.1998**
(21) Application number: 93303946.3
(22) Date of filing: 20.05.1993
(51) Int. Cl.: G06K 11/16

(54) **Tablet apparatus with reduced RFI from integral display lighting**
Digitalisiertablett mit Verminderung von durch die Beleuchtung einer integralen Anzeige verursachten Radiofrequenzstörungen
Appareil tablette avec réduction des interférences de fréquence radio produites par l'éclairage du dispositif d'affichage intégré

(30) Priority: 20.05.1992 JP 127276/92; 29.01.1993 JP 13399/93
(43) Date of publication of application: 24.11.1993
(73) Proprietor: SHARP KABUSHIKI KAISHA, Osaka (JP)
(72) Inventor: Tagawa, Takao, Kashihara-shi, Nara-ken (JP); Inazu, Shinsuke, Nara-shi, Nara-ken (JP); Okamura, Kazunari, Tenri-shi, Nara-ken (JP)
(74) Representative: Brown, Kenneth Richard

(56) References cited:
- EP-A- 0 375 328
- EP-A- 0 463 163
- US-A- 4 943 689

## Description

### BACKGROUND OF THE INVENTION

The present invention relates to a coordinate input device, and particularly to a tablet apparatus with a display function used for entering text, graphics, and other data types to a personal computer or word processor.

Electronic input devices for entering handwritten text, graphics, and numbers to a computer or word processor using an electrostatic induction-type tablet are commercially available. Such devices typically comprise a liquid crystal display (LCD) and an electrostatic induction-type tablet stacked thereon, and enable the user to enter data by writing with a stylus in much the same way people write with a pencil or pen on paper.

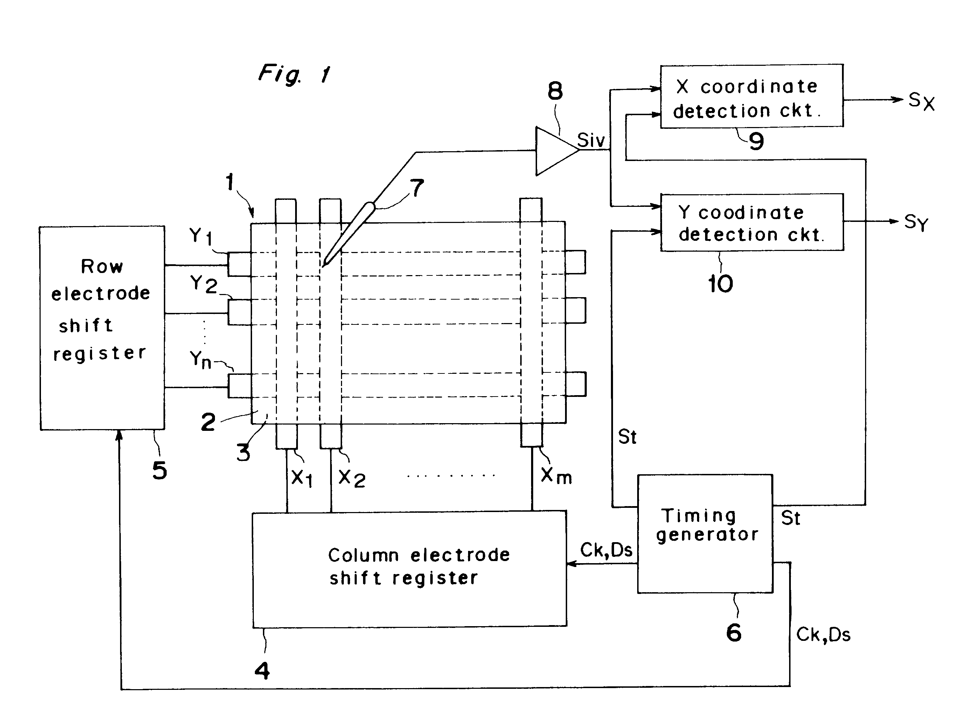

Electrostatic induction tablets used in such applications commonly have transparent striped electrodes of (e.g.) indium oxide formed on a transparent glass or plastic film. Data written on the tablet is captured by sequentially applying a pulse voltage to the transparent electrodes to scan the tablet. Fig. 1 shows an electrostatic induction tablet of this type.

A coordinate input member 1 of this electrostatic induction tablet has a glass substrate 2 on which plural transparent electrodes X₁, X₂, X₃ ... Xm (designated below as simply X) are formed, and a glass substrate 3 on which plural transparent electrodes Y₁, Y₂, Y₃ ... Yn (designated below as simply Y) are formed. These glass substrates 2, 3 are placed side by side with the respective electrode surfaces opposite and a minute gap in between. The coordinate input member 1 thus formed is installed over a liquid crystal display (not shown in the figure).

The transparent electrodes X, Y are connected to a column electrode shift register 4 and a row electrode shift register 5, respectively. The two shift registers 4, 5 are connected to a timing generator 6.

The timing generator 6 outputs shift data Ds and clock signals Ck to the shift registers 4, 5. Based on this shift data Ds and clock signal Ck, the column electrode shift register 4 sequentially applies a pulse voltage to the transparent electrodes X, and the row electrode shift register 5 sequentially applies a pulse voltage to the transparent electrodes Y.

When the tip of a coordinate detection pen 7 ("detection pen" below) is brought into proximity with the surface of the coordinate input member 1, a voltage is induced to the detection pen 7 tip by the floating capacitance between an electrode in the tip of the detection pen 7 and either the transparent column or row electrode X or Y. The voltage induced to the detection pen 7 is then amplified by an amplifier 8, and input to an X coordinate detection circuit 9 and a Y coordinate detection circuit 10.

The X and Y coordinate detection circuits 9, 10 calculate the X or Y coordinate, respectively, of the detection pen 7 tip based on the induction voltage signal Siv from the amplifier 8 and a timing signal St from the timing generator 6. The X coordinate detection circuit 9 outputs an X coordinate signal S_{X} expressing the X coordinate of the detection pen 7 tip, and the Y coordinate detection circuit 10 similarly outputs a Y coordinate signal S_{Y} expressing the Y coordinate of the detection pen 7 tip. The liquid crystal display then displays a pixel located at the coordinates specified by the tip of the detection pen 7 based on the X/Y coordinate signals S_{X}, S_{Y} from the X and Y coordinate detection circuits 9, 10.

In an electronic input device having an electrostatic induction tablet of the above type and an LCD laminated together, however, the reflectivity and transmissivity of areas of the coordinate input member 1 where the transparent electrodes X, Y are present differ from those areas where the transparent electrodes X, Y are not present. As a result, the electrode grid can be seen below the grid on the display screen of the LCD, causing a natural degradation of image quality.

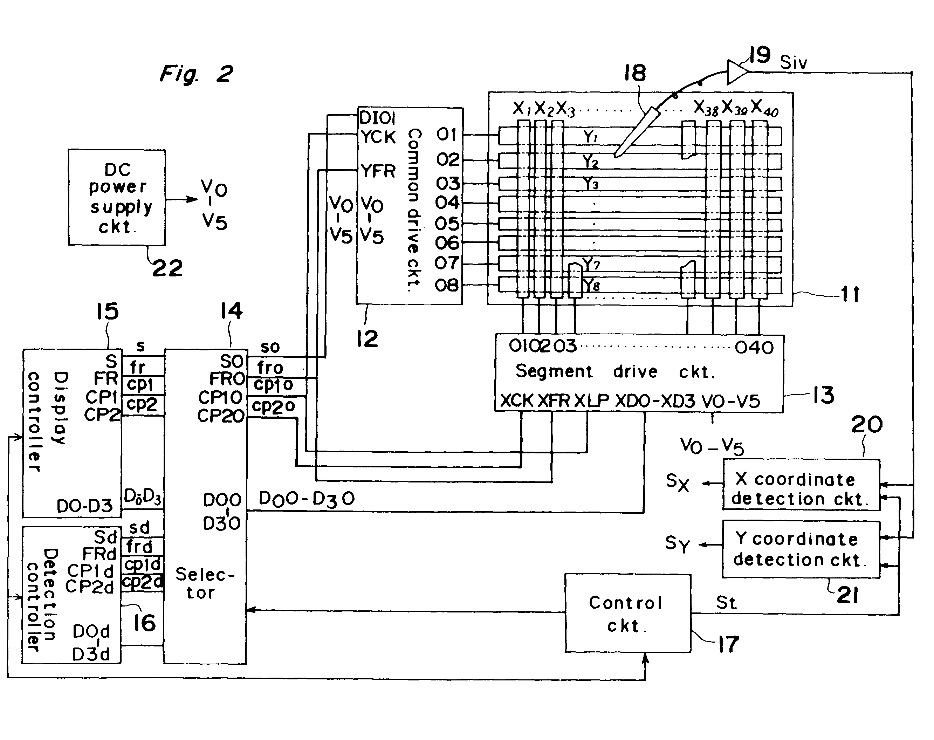

Fig. 2 shows a display-integrated type tablet apparatus which has been recently proposed by one of the present inventors as a means of eliminating this problem (Japanese Patent Application No. 4-19064). The following describes the display-integrated type tablet apparatus for better understanding of the background of the present invention, although it is not prior art to the present invention.

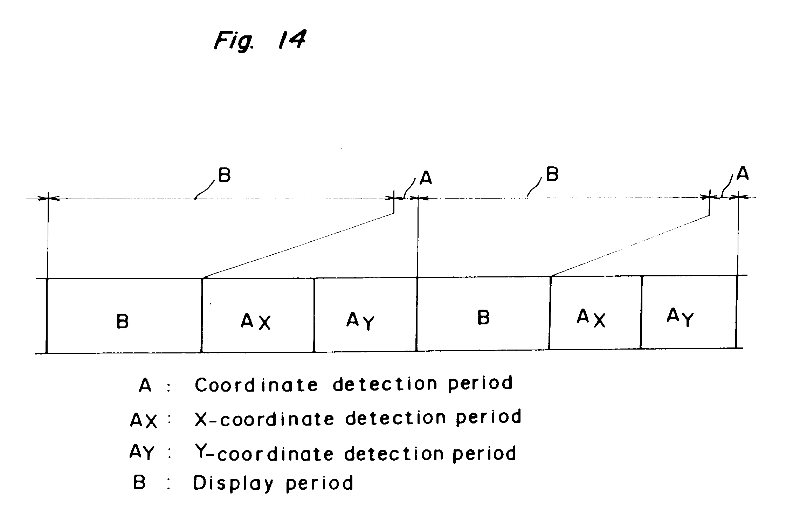

This display-integrated type tablet apparatus combines display electrodes of the liquid crystal display and the coordinate detection electrodes of the electrostatic induction tablet. Time-share processing is applied for coordinate detection and image display. Fig. 14 shows the timing of the coordinate detection and image display processings in the display-integrated type tablet apparatus of Fig. 2.

Referring to Fig. 2, a liquid crystal panel 11 is built with the liquid crystals sandwiched between common electrodes Y₁ - Y₈ (referred to as simply Y below) and segment electrodes X₁ - X₄₀ (referred to as simply X below). As in the apparatus above, the common and segment electrodes are each sequentially ordered and are arrayed perpendicularly to each other. The display pixels are formed at the intersections of the common and segment electrodes Y and X, resulting in a pixel matrix of 8 × 40 pixels.

Compared with the electrostatic induction tablet stacked on a liquid crystal display as described above, this display-integrated type tablet apparatus is easier to read because the grid-shaped electrode pattern is not visible, and can easily be made lighter, smaller, and less expensive because the electrodes and drive circuits are shared by the liquid crystal display and the electrostatic induction tablet.

This display-integrated type tablet apparatus operates as follows.

A common drive circuit 12 for driving the common electrodes Y and a segment drive circuit 13 for driving the segment electrodes X are connected through a selector 14 to a display controller 15 and a detection controller 16. The selector 14 is controlled by a control circuit 17 to output signals received from the display controller 15 to the common drive circuit 12 and the segment drive circuit 13 during the display period (indicated by B in Fig. 14), and to output signals received from the detection controller 16 to the common drive circuit 12 and segment drive circuit 13 during the coordinate detection period (indicated by A in Fig. 14).

It is to be noted that the selector 14, display controller 15, detection controller 16, and control circuit 17 are shown as separate circuit blocks in Fig. 2, but in practice these are included in a single LSI device and cannot be separated into discrete blocks as shown in the figure.

During the display period, shift data "s" is output from a shift data output terminal S of the display controller 15, an inversion signal "fr" is output from the inversion signal output terminal FR, a clock signal "cp1" is output from a clock output terminal CP1, another clock signal "cp2" is output from a clock output terminal CP2, and display data "D_{0"} - "D_{3"} is output from data output terminals D0 - D3.

The clock signal "cp1" is a clock signal with a period equal to the period needed to display one row of pixels, and is input through a selector 14 output terminal CP10 as clock signal "cp1o" to a clock input terminal YCK of the common drive circuit 12 and to a latch pulse input terminal XLP of the segment drive circuit 13. The shift data "s", which is a pulse signal for selecting a specific common electrode Y, is input to a shift data input terminal DI01 of the common drive circuit 12 as shift data "so" through an output terminal SO of the selector 14 synchronized to the clock signal "cp1o".

When the shift data "so" is input to the common drive circuit 12, the pulse position of the shift data "so" is shifted by a shift register of the common drive circuit 12 synchronized to the clock signal "cp1o", and a drive pulse of a common electrode drive signal is applied to the common electrode Y from an output terminal O1, O2..., or O8 (referred to as simply "On" below) of the common drive circuit 12 corresponding to the shifted position. This common electrode drive signal is generated based on the bias V₀ - V₅ supplied from a DC power supply circuit 22.

The clock signal "cp2" is a clock signal with a period obtained by dividing the period needed to display one row of pixels, and is input through an output terminal CP20 of the selector 14 as clock signal "cp2o" to a clock input terminal XCK of the segment drive circuit 13.

The display data D₀ -D₃ are input through the output terminals D0O - D3O of the selector 14 as display data D₀o - D₃o to the input terminals XD0 - XD3 of the segment drive circuit 13, and get sequentially stored into a register (not shown) of the segment drive circuit 13, synchronized to the clock signal "cp2o". Once all display data representing pixels in one row have been stored in the register of the segment drive circuit 13, the stored display data is latched by a latch circuit (not shown) in the segment drive circuit 13 in response to the clock signal "cp1o" input to the latch pulse input terminal XLP, and a drive pulse of the segment electrode drive signal is applied in accordance with each display data to the segment electrode X from the corresponding output terminal O1, O2..., or O40 (referred to as simply "Om" below) of the segment drive circuit 13. This segment electrode drive signal is also generated based on the bias V₀ - V₅ supplied from the DC power supply circuit 22.

The inversion signal "fr" causes the direction of the voltage applied to the liquid crystals to invert at each cycle during the display period to prevent deterioration due to electrical breakdown of the liquid crystals. The inversion signal "fr" is input through an inversion signal output terminal FRO of the selector 14 as inversion signal "fro" to an inversion signal input terminal YFR of the common drive circuit 12 and to an inversion signal input terminal XFR of the segment drive circuit 13.

Operation of the common drive circuit 12 and segment drive circuit 13 drives the pixel matrix of the liquid crystal panel 11 in row sequence, and an image defined by display data D₀ - D₃ is displayed on the liquid crystal panel 11.

During the coordinate detection period (indicated by A in Fig. 14), shift data "sd" is output from a shift data output terminal Sd of the detection controller 16, an inversion signal "frd" is output from an inversion signal output terminal FRd, a clock signal "cp1d" is output from a clock output terminal CP1d, a clock signal "cp2d" is output from a clock output terminal CP2d, and drive data D₀d - D₃d is output from data output terminals D0d - D3d.

The first clock signal "cp1d" is a clock signal with a period equal to the period needed to scan one common electrode Y, and is input through the output terminal CP1O of the selector 14 as clock signal "cp1o" to the clock input terminal YCK of the common drive circuit 12 and to the latch pulse input terminal XLP of the segment drive circuit 13. The shift data "sd", which is a pulse signal for selecting a specific common electrode Y, is input to the shift data input terminal DI01 of the common drive circuit 12 as shift data "so" through the output terminal SO of the selector 14. Input of the shift data "so" is synchronized to the clock signal "cp1d".

As described above for the display period, the pulse position of the shift data "so" is shifted sequentially by the shift register of the common drive circuit 12 in response to the clock signal "cp1o", and a pulse of the common electrode scan signal is sequentially applied to the common electrodes Y from the output terminals On corresponding to the shifted positions. This common electrode scan signal is generated based on the bias supply V₀ - V₅ from the DC power supply circuit 22.

The clock signal "cp2d" is a clock signal of which the period is the scanning period required to scan the segment electrode X, and is input through the selector 14 output terminal CP2O to the clock input terminal XCK of the segment drive circuit 13 as clock signal "cp2o".

The drive data D₀d - D₃d is input through the output terminals D0O - D3O of the selector 14 as drive data D₀o - D₃o to the input terminals XD0 - XD3 of the segment drive circuit 13. The drive data is written into the register of the segment drive circuit 13 synchronized to the clock signal cp2o. A segment electrode scan signal for the drive data is sequentially output from the output terminals Om of the segment drive circuit 13 to the segment electrodes X. The segment electrode scan signal is also generated based on the bias supply V₀ - V₅ from the DC power supply circuit 22.

As shown in Fig. 14, the coordinate detection period A is divided into an x-coordinate detection period Aₓ and a y-coordinate detection period A_{y} (which follows x-coordinate detection). During the x-coordinate detection period the segment electrode scan signal, which is a pulse voltage signal, is applied sequentially to the segment electrodes X. During the y-coordinate detection period the common electrode scan signal, which is also a pulse voltage signal, is applied sequentially to the common electrodes Y.

A voltage is induced to the detection pen 18 by applying this pulse voltage signal of the segment or common electrode scan signal according to the floating capacitance between an electrode provided in the tip of the coordinate detection pen 18 (referred to as tip electrode below) and either the segment or common electrode X or Y. The voltage induced to the detection pen 18 is then amplified by an amplifier 19, and input to an X coordinate detection circuit 20 or a Y coordinate detection circuit 21 as signal Siv.

The X and Y coordinate detection circuits 20, 21 calculate the X or Y coordinate, respectively, of the tip of the detection pen 18 by detecting the time from application of the pulse voltage signal to occurrence of the maximum induction voltage based on the output signal Siv from the amplifier 19 and the timing signal St from the control circuit 17.

Both electrostatic induction-type tablet devices described above, i.e., the electrostatic induction tablet laminated over a liquid crystal display as shown in Fig. 1 and the display-integrated type tablet apparatus as shown in Fig. 2, consume less power, feature a simpler construction, and offer stronger resistance to external and internal magnetic noise when compared with electromagnetic induction tablets. As a result, these apparatuses are widely used in hand-held data entry devices using a stylus for manual data entry.

As described above, the electrostatic induction tablets detect the coordinates at the detection pen tip using the induction voltage produced at the detection pen 7, 18 when the scan pulse is applied to the coordinate detection electrodes (i.e., the column and row electrodes in Fig. 1, and the common and segment electrodes in Fig. 2). As a result, errors occur when an electrostatic noise source is near the tip electrode of the detection pen 7, 18.

Liquid crystal panels used along with the tablet of Fig. 1 or incorporated in the display-integrated type tablet apparatus of Fig. 2 are not light-emitting devices. As a result, a sharp display can be enjoyed under natural daylight or artificial lighting, but such displays are virtually unreadable in darkness. It is therefore common to provide a light source (a backlight) behind the liquid crystal panel in order to achieve a clear, readable display even in dark places. Such displays are known as "backlit" displays. For the above reason, the recently proposed display-integrated type tablet apparatus of Fig. 2 also has a fluorescent lamp 40 as a backlight in the liquid crystal panel 11, as shown Fig. 3 which is a cross-sectional view of the display-integrated type tablet apparatus.

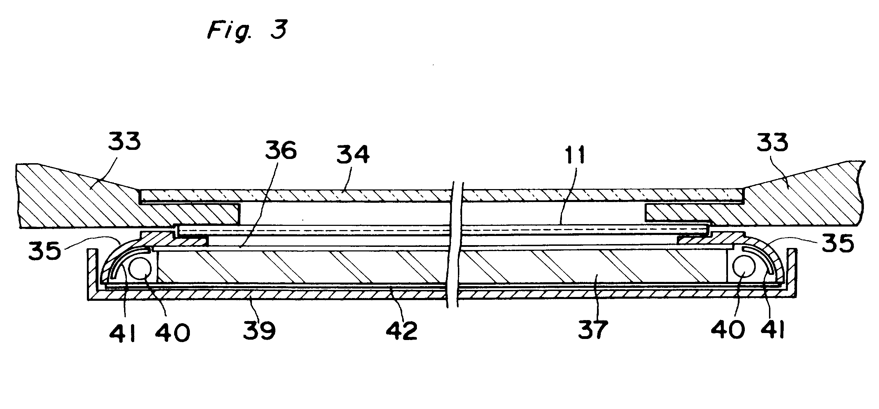

In Fig. 3, the liquid crystal panel 11, around which are provided the segment drive circuit 13 and-common drive circuit 12 (not shown in Fig. 3), is covered by a peripheral front panel 33 and an input panel 34 supported by the front panel 33. An air space of 1 - 3 mm is provided between the input panel 34 surface and the liquid crystal panel 11 surface.

The input panel 34 is formed of, for example, a transparent acrylic with a reinforced surface treatment to prevent scratching by the detection pen 18. It is also treated with a static prevention coating to prevent friction charging between the detection pen tip and the input panel surface.

Behind the liquid crystal panel 11 are provided a plastic lamp holder 35 for holding the fluorescent lamp 40, a light guide panel 37 for guiding light from the fluorescent lamp 40 at the side behind the liquid crystal panel 11, and a dispersion panel 36. Reflectors 41, 42 are also provided inside the lamp holder 35 and behind the light guide panel 37 to efficiently carry light output from the fluorescent lamp 40 behind the liquid crystal panel 11. Not-shown drive voltage application members such as a lamp drive power supply and lead wires for the electrodes of the fluorescent lamp 40 are also provided in the side of a bottom panel 39.

Although the fluorescent lamp 40 is used as the backlight in the apparatus shown in Figs. 2 and 3, an electroluminescent (EL) panel can also be used as a backlight to make the device thinner.

The AC drive voltage for such light sources is typically high, approximately 100 V, 400 Hz for EL panels, and several hundred volts for fluorescent lamps. When the lighting frequency of the fluorescent lamp is close to or is an integer multiple of the display frame frequency of the liquid crystal panel, flicker is produced because of the difference therebetween. The lighting frequency, namely, frequency of the AC voltage for the light sources, is therefore usually several dozen kilohertz.

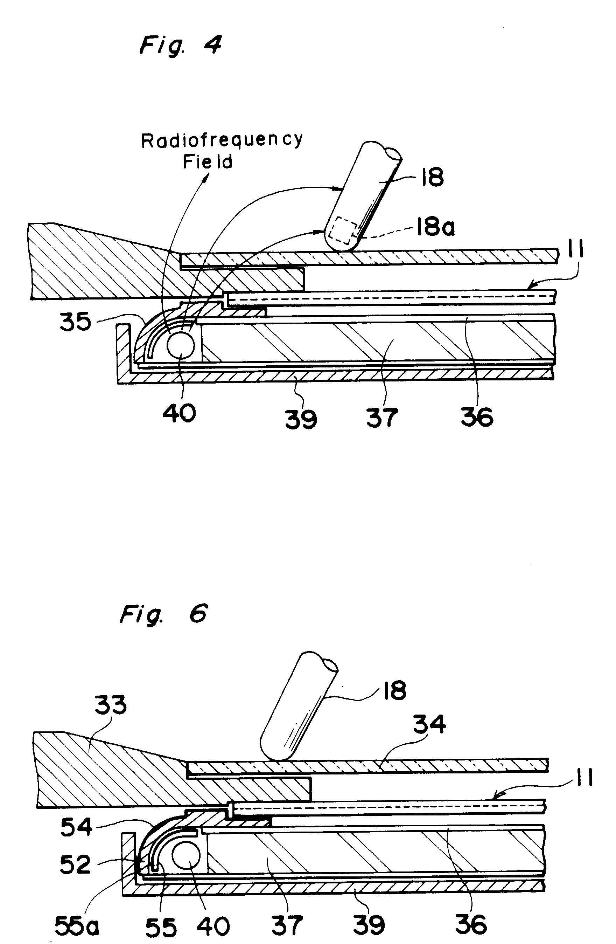

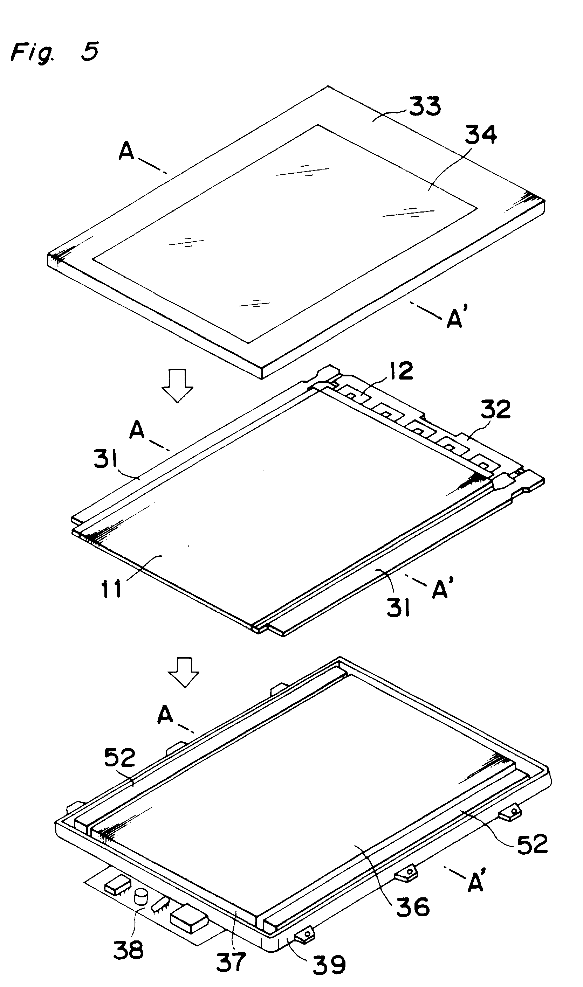

The lighting frequency is determined according to the effect on the image display and efficiency, but when the lighting frequency is high and the applied voltage is high, a radiofrequency field occurs around the backlight source 40 and lead wires and power supply unit therefor. Fig. 4 shows the radiofrequency field occurring around the backlight source 40. When this radiofrequency field acts on the tip electrode 18a of a high impedance detection pen 18, an electrostatic induction voltage is induced to the tip electrode 18a.

This electrostatic induction voltage is noise to the detection pen 18, and causes coordinate detection errors in the display-integrated type tablet apparatus of the electrostatic induction type which, as described above, detects the coordinates at the detection pen tip using the induction voltage produced at the detection pen 18 when the scan pulse is applied to the common and segment electrodes X, Y.

For example, in practice, the induction voltage of the detection pen 18 resulting from the scan voltage applied to the lower electrodes (the common electrodes Y in Fig. 2) relative to the detection pen position is a weak voltage of only 2 - 3 mV when no backlight is used for the liquid crystal panel 11. (Since the display-integrated type tablet apparatus incorporates the liquid crystal panel 11, the output field of the upper electrodes as viewed from the detection pen 18, i.e., the segment electrodes X in Fig. 2, is strong, and the induction voltage occurring at the detection pen 18 is also high. However, the output field from the lower electrodes, i.e., the common electrodes Y in Fig. 2, is a field leaked from between the upper electrodes, and the induction voltage induced to the detection pen 18 is lower than the induction voltage based on the output field from the upper electrodes by an order of one to two places.)

When the fluorescent lamp 40 is used as the backlight, however, a voltage of as large as approximately 100 mV is induced when the detection pen 18 is placed near the edge of the liquid crystal panel 11, whether the scan voltage is applied or not applied to the electrodes. This is because the fluorescent lamp 40 and power supply unit and the lead wires for the fluorescent lamp 40 are near the detection pen 18, and the radiofrequency field emitted from the fluorescent lamp and power supply unit acts on the detection pen 18. In addition, because the amplification rate of the induction voltage is set larger when calculating the Y coordinates than calculating the X coordinates due to the weaker output field from the lower electrodes Y, the calculated y coordinate value is more susceptible to any given noise level than is the calculated x coordinate value.

Under such signal-to-noise ratio conditions, detection precision not only drops, it becomes impossible to detect the pen coordinates, and fluorescent lamps cannot be used as a backlight in electrostatic induction-type display-integrated type tablet apparatuses. This is also true when an EL panel is used as the backlight. In addition, this applies not only to the display-integrated type tablet apparatus shown in Fig. 2, but also to the electronic input device wherein the electrostatic induction tablet shown in Fig. 1 is formed on the liquid crystal display panel.

EP-A-0 463 163 relates to a coordinate input device consisting of a combination of a tablet that uses electromagnetic waves of a first frequency as coordinate detection signals and an illumination unit driven by signals of a second frequency, wherein the frequencies are so adjusted as to prevent the malfunction of the coordinate input device because of from electric circuits such as an inverter circuit for driving the illumination unit.

### SUMMARY OF THE INVENTION

It is therefore desirable to provide a tablet apparatus with a display function that can prevent coordinate detection errors caused by the radiofrequency field emitted from the light emissions source, which functions as a backlight and operates at an alternating current (AC) voltage, and backlight drive circuitry for applying the AC voltage to the light emissions source.

The present invention provides an improvement on a tablet apparatus of an electrostatic induction type with a display function for inputting coordinates of a position indicated by an associated indicating means and displaying an image at the indicated position.

According to the present invention, there is provided an apparatus as set out in claim 1 or claim 9.

Typically, a liquid crystal display panel is used as the display panel.

In an aspect of the present invention, the light emissions source and the voltage application means are placed behind the display panel, and the means for eliminating electrostatic noise comprises a shield electrode formed of a conductive material which is provided between an input panel of the tablet apparatus and the light emissions source and voltage application means for shielding the radiofrequency field generated from the light emissions source and voltage application means.

With this arrangement, the radiofrequency field, which is emitted from the light emissions source driven by an alternating current voltage and provided behind the display panel and from the voltage application means applying the AC voltage to this light emissions source, is shielded by the shield electrode provided between the light emissions source and voltage application means and the input surface of the tablet. As a result, this radiofrequency field is prevented from acting on the associated indicating means, specifically, a high input impedance detection pen, positioned at the input panel, and an induction voltage is prevented from occurring to the detection pen. As a result, only the induction voltage based on a scan pulse signal from the electrodes used for coordinate detection is induced to the detection pen, and the correct coordinates of the detection pen tip on the input surface are detected.

The light emissions source may be a fluorescent lamp disposed on either side of the display panel, and the shield electrode is preferably provided on a lamp holder of the fluorescent lamp.

In this case, the radiofrequency field emitted from the fluorescent lamp, which is a main electrostatic noise source, is effectively shielded by the shield electrode provided on the fluorescent lamp holder. In addition, this arrangement does not require a separately provided place for the shield electrode. The shield electrode may be provided on other appropriate places making use of components of the apparatus.

In this tablet apparatus, the radiofrequency field is not generated during the coordinate detection period. Therefore, correct coordinates specified by the indicating means are detected because operation of the light emissions source and the voltage application means are stopped.

Preferably, scanning of the electrodes is started a predetermined time after application of the AC voltage to the light emissions source by the voltage application means is stopped, and the application of the AC voltage to the light emissions source by the voltage application means is started a predetermined time after the scanning of the electrodes is stopped.

In an embodiment of the invention, the control circuit controls the display control circuit and voltage application circuit to set the display period. The first drive circuit and the second drive circuit are thus controlled by the display control circuit, and an image is displayed on the display panel. On the other hand, an alternating current (AC) voltage is applied to the lighting means by the voltage application circuit, causing the lighting means to light and the display panel to be illuminated from the back side.

The detection control circuit, coordinate detection circuit, and voltage application circuit are then controlled by the control circuit and the coordinate detection period is set. At least one of the first drive circuit and the second drive circuit is thus controlled by the coordinate detection circuit to sequentially scan at least either the first or second electrodes. The voltage induced to the detection pen is output by the detection pen, and the coordinates on the display panel specified by the detection pen tip are detected by the coordinate detection circuit based on the output signal from the detection pen. In this coordinate detection period, the AC voltage applied to the lighting means from the voltage application circuit is cut off and the lighting means shuts off.

Operation of the voltage application circuit and lighting means is thus stopped during the coordinate detection period, and a radiofrequency field is not generated from the voltage application circuit or lighting means. The coordinates of the detection pen tip on the display panel can therefore be correctly detected.

In an embodiment of the present invention, the control circuit controls the detection control circuit and voltage application circuit such that electrode scanning by the detection control circuit begins a predetermined time after application of the alternating current voltage to the lighting means from the voltage application means stops, and application of the alternating current voltage to the lighting means by the voltage application circuit begins a predetermined time after electrode scanning by the detection control circuit finishes.

The display panel may be of a duty-type or an active-matrix type, and a liquid crystal display panel is typically used.

In the above embodiment, the on/off timing of the AC voltage applied to the lighting means by the voltage application circuit is set outside the electrode scanning period, and electrostatic noise does not occur during the coordinate detection period even if on/off switching of the AC voltage occurs near the AC voltage peak. Thus, electrostatic noise is prevented from occurring even during a transition period from the display period to the coordinate detection period, and vice versa. As a result, coordinate detection errors can be prevented with even greater reliability.

In an electrostatic induction tablet apparatus with a display function according to a still another embodiment, the frequency of the AC voltage applied by the voltage application circuit to the lighting means or member, which illuminates the display panel from the back, is set to a frequency that does not fall within a range of frequency components of the induction voltage induced to the detection pen from scanning pulses. Electrostatic noise, which is induced to the detection pen by the radiofrequency field from the lighting means and voltage application circuit and is superimposed to the true induction voltage caused by the scanning pulses, can be therefore completely separated from the frequency components of the true induction voltage. The coordinates of the detection pen tip on the electrostatic induction tablet are therefore correctly detected.

### BRIEF DESCRIPTION OF THE DRAWINGS

The present invention will become more fully understood from the detailed description given below and the accompanying drawings wherein:
Fig. 1 is a block diagram of an electrostatic induction tablet;
Fig. 2 is a block diagram of a display-integrated type tablet apparatus;
Fig. 3 is a cross-sectional view of the display-integrated type tablet apparatus of Fig. 2;
Fig. 4 is a cross-sectional view illustrating the exposure of the detection pen in an electrostatic induction tablet to the radiofrequency field generated from the fluorescent lamp light source;
Fig. 5 is an assembly diagram of the components around the liquid crystal panel in a display-integrated type tablet apparatus;
Fig. 6 is a cross-sectional view of a display-integrated type tablet apparatus having a shield electrode;

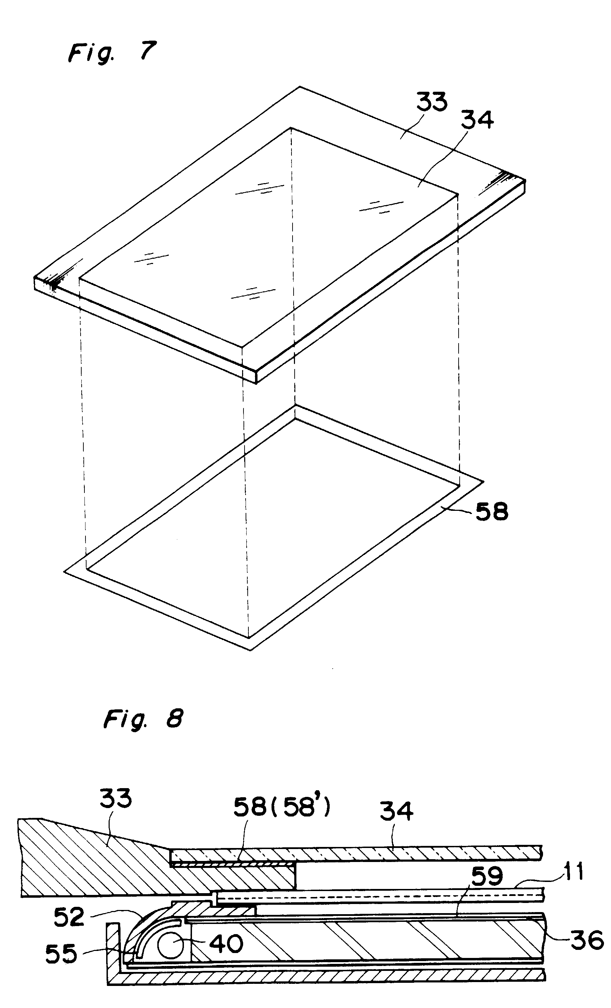

Fig. 7 is an exploded view showing a shield plate used as a shielding member;

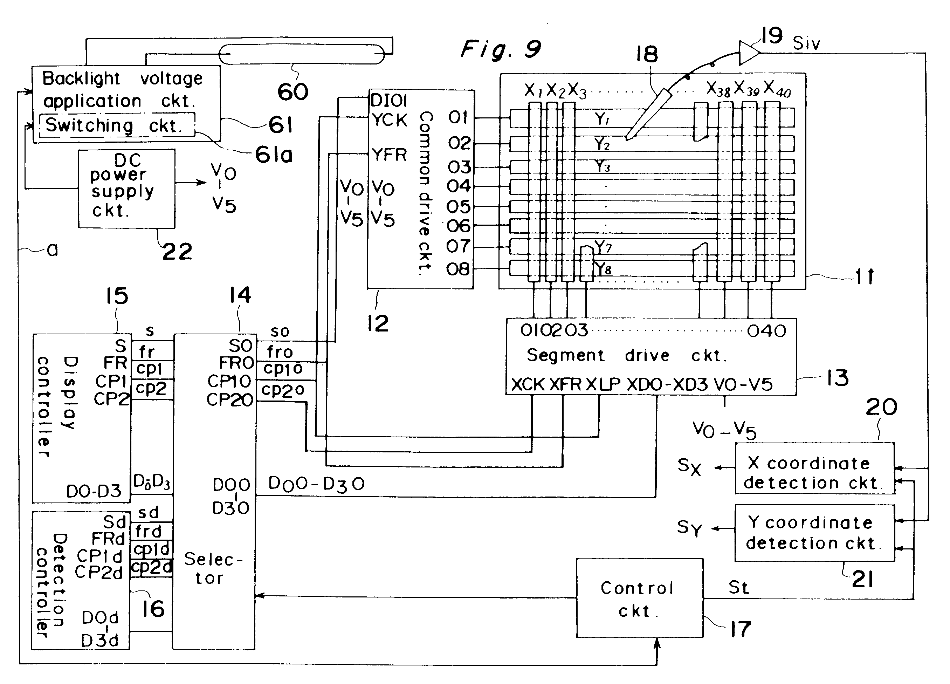

Fig. 8 is a cross-sectional view of a display-integrated type tablet apparatus of the present invention having the shield plate of Fig. 7 and further members acting as shield electrodes;
Fig. 9 is a block diagram of a display-integrated type tablet apparatus of the present invention, wherein a display panel is driven by a duty-type driving method;

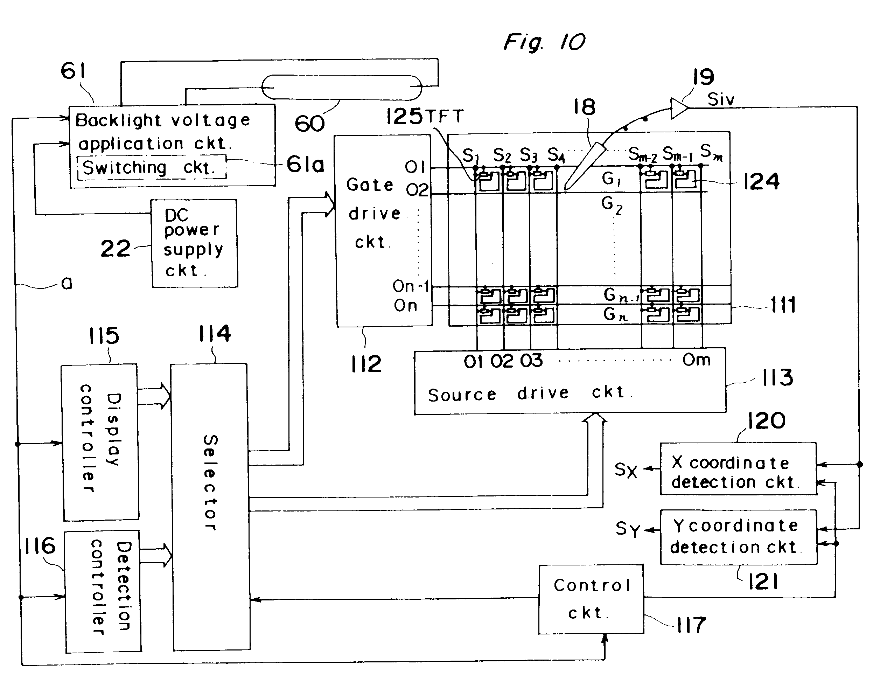

Fig. 10 is a block diagram of a display-integrated type tablet apparatus of the present invention, wherein a display panel is of an active-matrix type;

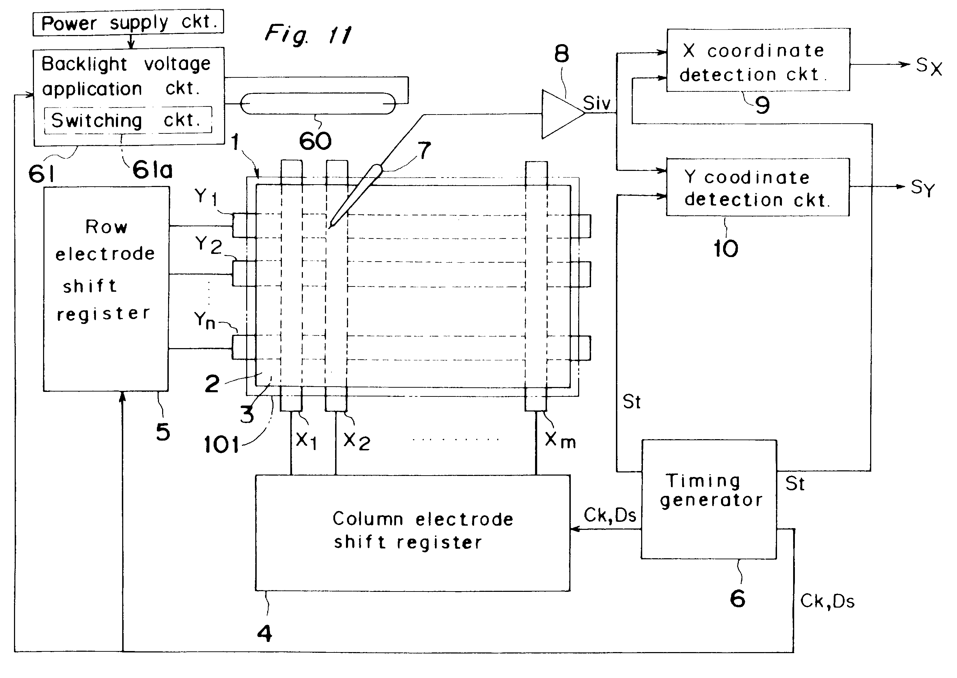

Fig. 11 is a block diagram of a tablet apparatus having a display function of the present invention wherein a tablet is stacked on a display panel;

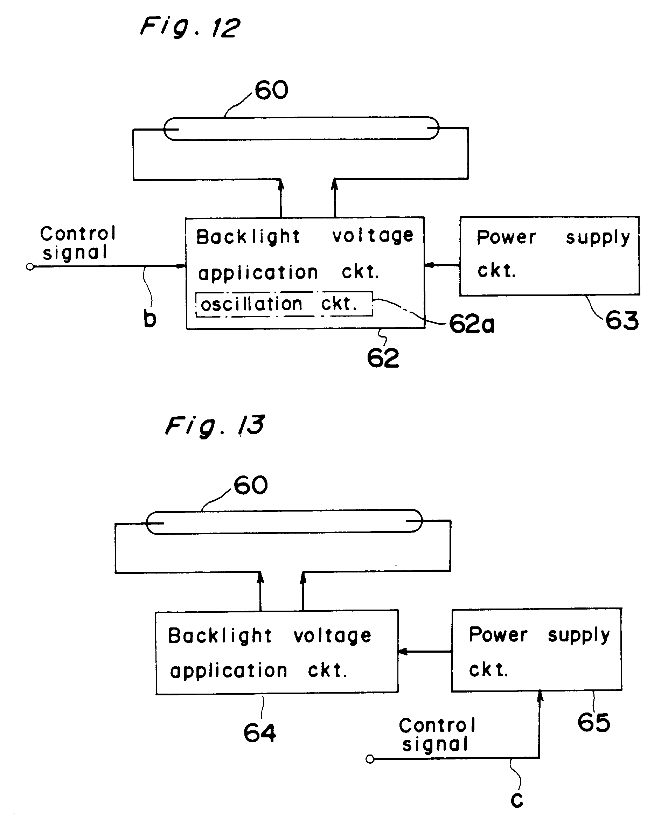

Fig. 12 is a block diagram showing a backlight drive circuitry to be incorporated into a tablet apparatus with a display function of the present invention;
Fig. 13 is a block diagram showing another backlight drive circuitry to be incorporated into a tablet apparatus with a display function of the present invention;
Fig. 14 is a timing chart showing the display period and coordinate detection period adopted in the display-integrated type tablet apparatus of Fig. 2;

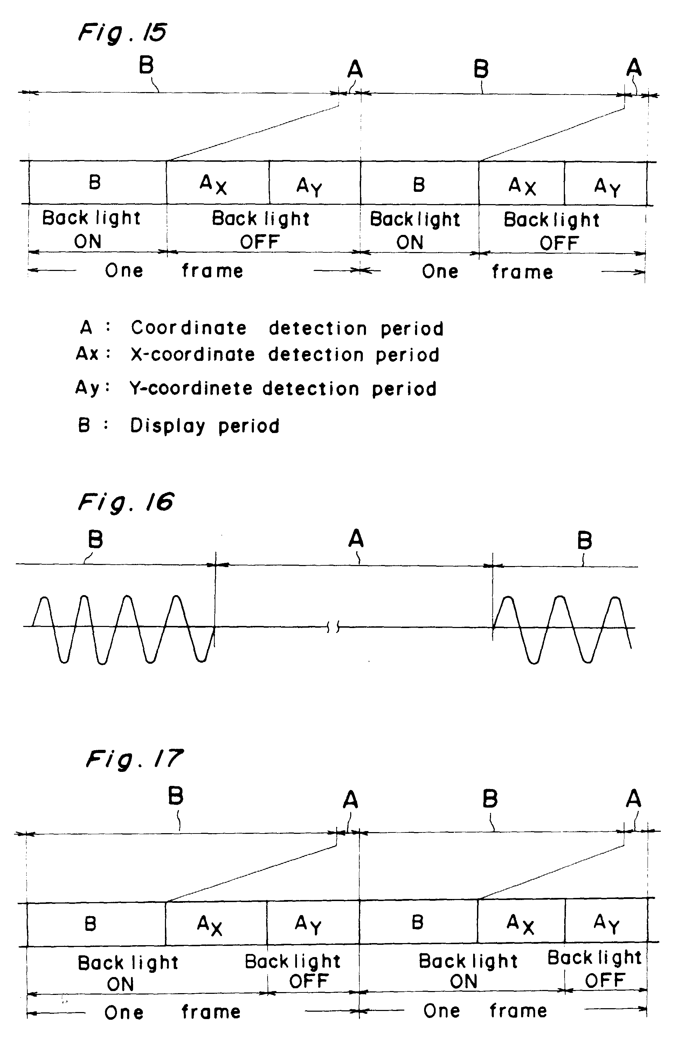

Fig. 15 is a timing chart of an example of the backlight on/off control timing in a backlight voltage application circuit shown in, for example, Fig. 9;
Fig. 16 is a waveform diagram of the supply voltage in the backlight on/off operation controlled at the timing shown in Fig. 15;
Fig. 17 is a timing chart of another example of the backlight on/off control timing in the backlight voltage application circuit; and

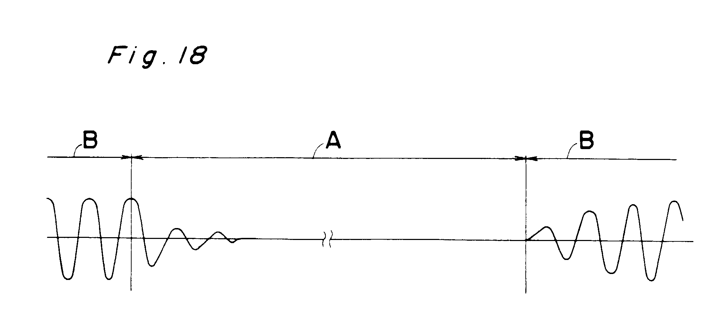

Fig. 18 is another waveform diagram of the supply voltage in the backlight on/off operation effected by controlling a power supply circuit as shown in Fig. 13.

### DETAILED DESCRIPTION OF PREFERRED EMBODIMENTS

Fig. 5 is an illustration of the assembly surrounding a liquid crystal panel 11 in a display-integrated type tablet apparatus, which has a fluorescent lamp as the backlight source. Fig. 6 is a fragmentary cross-sectional view taken along line A-A' of Fig. 5. Note that like functional parts in the display-integrated type tablet apparatuses in Figs. 2-6 are indicated by the same reference numerals, and further detailed description is omitted below.

As shown in Figs. 5 and 6, a liquid crystal panel 11 is disposed between an input panel 34 and a bottom plate 39. In the display-integrated type tablet apparatus, a segment drive circuit board 31 mounting a segment drive circuit 13 thereon is provided on either side of the liquid crystal panel 11, and the liquid crystal panel 11 is thus driven from both sides. This is simply because two liquid crystal panels are provided like a single liquid crystal panel on a single circuit board for a two-screen display-integrated type tablet apparatus. The use of two liquid crystal panels has no significance for the present invention. In Fig. 5, reference numeral 32 is a common drive circuit board on which is mounted a common drive circuit 12, and reference numeral 38 is a lamp drive power supply circuit.

A fluorescent lamp 40 received in a lamp holder 52 is provided on either side of a light guide panel 37 on the bottom panel 39.

As described above, the fluorescent lamp 40 is driven by a radiofrequency voltage supplied from the lamp drive power supply circuit 38 through not-shown lead wires. The lamp drive power supply circuit 38 and the lead wires constitute the voltage application means for the fluorescent lamp 40. Because one of the output terminals of the lamp drive power supply circuit 38 is grounded, an AC voltage with a 0-V center is output from the other terminal. Electrostatic noise is emitted from the lead wire connected with the AC-voltage output terminal of the lamp drive power supply circuit 38 and from all parts of the fluorescent lamp 40 except its cathode side (the ground electrode side).

The fluorescent lamp anode side is provided close to the lamp drive power supply circuit 38 so that the lead wire is as short as possible. It is further preferable for the lead wire to pass behind the back of the metallic bottom plate 39. Because the distributed inductance of shielded wire is high, shielded wire is undesirable with radiofrequency lights.

Electrostatic noise, which is actually the greatest problem in electrostatic induction-type tablet apparatuses, is emissions noise due to the radiofrequency field generated by the fluorescent lamp 40, as shown in Fig. 4.

As far as the radiofrequency field is present behind a central, display portion of the liquid crystal panel 11, i.e., a portion about 20 mm from the periphery of the liquid crystal panel 11, at which the common and segment electrodes are provided, most of the radiofrequency field is shielded by the those common and segment electrodes which function as shield electrodes. Therefore, when the detection pen 18 is on a portion of the input panel corresponding to the central portion of the liquid crystal, the detection pen 18 is not affected by the radiofrequency field.

However, the radiofrequency field generated by the fluorescent lamp 40 and present in the periphery of the liquid crystal panel 11 cannot be shielded by the common and segment electrodes.

The radiofrequency field from the fluorescent lamp 40 is shielded by the following methods which are used individually or in combination.

First, the lamp holder 52 is formed from aluminum or another metal, and is grounded. In this case, the lamp holder 52 itself functions as a shield electrode. While this shield method effectively shields the high frequency field, it is relatively expensive. In addition, because the entire lamp holder is grounded and the inner side of the lamp holder 52 formed of a metal is very close to the fluorescent lamp 40, the lamp holder 52 increases the electrostatic capacitance between the fluorescent lamp 40 and ground. This causes a problem when the tablet apparatus is placed under the low-temperature condition. Specifically, when the tablet apparatus is placed in the low-temperature environment and power is turned on, the fluorescent lamp 40 sometimes does not light immediately. This will give an unfavorable impression to users. This problem can be solved by forming the lamp holder 52 of plastic and coating only an outer surface of the lamp holder 52 with an electrically conductive film 54 with an inner surface of the lamp holder 52 left uncoated, as described below.

In the next shielding method, the lamp holder 52 is formed of plastic and only an outer surface of the lamp holder is electrolessly plated with a metal such as nickel or copper to be the electrically conductive film 54. The electrically conductive film 54 is grounded and functions as a shield electrode. In order to electrolessly plate only the outer surface of the lamp holder 52, an inner surface thereof is masked when the lamp holder is plated. Alternatively, a whole surface of the lamp holder 52 may be electrolessly plated and the metal on the inner surface of the lamp holder 52 may be mechanically or chemically removed afterward. In this case, since a plastic lamp holder is used, a conventional mold for the lamp holders is usable. This shielding method is less expensive than the first method.

Alternatively, the conductive film 54 is formed by spray coating or dip coating the outer surface of the plastic lamp holder with a metal such as copper or nickel. The so formed conductive film 54 has a surface resistance of several tens ohms which is a litter higher than the conductive film 54 formed by electroless plating, but can achieve a sufficient radiofrequency field shielding effect.

When the conductive film 54 is formed by spraying paint containing powdered copper, the conductive film 54 can offer a very good conductivity. For example, the conductive film 54 formed using paint of powdered copper had a resistance (between points 1 cm distant from each other) of 8.5 ohms. In contrast, a conductive film formed by applying paint containing nickel powders showed a resistance of 40 ohms. A conductive film formed from paint containing carbon powders showed a resistance of as large as 300 ohms and offered an insufficient shielding effect.

An ABS resin is suitable as material of the plastic lamp holder in terms of moldability and fabrication costs. For the lamp holder 52 formed of this ABS resin, it is desirable to use paint wherein powdered copper is dissolved in a solvent such as toluene, methyl ethyl ketone, or thinner. This paint is sprayed using a high-pressure gun and then the solvent is evaporated, resulting in a conductive film 54 having good properties in strength and resistance.

It is to be noted that in the above, the conductive film 54 is formed only on the outer surface of the lamp holder 52 for the purpose of avoiding the above-mentioned problem due to the increased capacitance which would occur between the lamp 40 and a conductive film formed on the inner surface of the lamp holder. However, needless to say, the conductive film 54 formed on both surfaces or only the inner surface of the lamp holder 52 is also effective in accomplishing the purpose of shielding the radiofrequency field, and even in these cases no problem will occur as far as the apparatus is used in normal temperature conditions.

In the next method, a Mylar® or similar film with a metal vapor deposition film 55a on one side is provided as a reflective plate 55 inside the lamp holder 52 as shown in Fig. 6. This reflective plate 55 features good reflectivity because of the mirror-like metal vapor deposition film 55a, which can also be grounded to act as the shield electrode. As a result a radiofrequency field shielding effect is easily achieved.

Further shielding methods are shown in Figs. 7 and 8. As shown in Fig. 7, a picture frame-shaped thin shield plate 58 is sandwiched between the input panel 34 and the front panel 33, and is grounded. This not only shields the radiofrequency field from the fluorescent lamp 40, but also shields noise from the common drive circuit 12 and segment drive circuits provided around the liquid crystal panel 11 (see Fig. 5).

As an alternative of the shield plate 58, a conductive film 58' can be formed on the front panel 33 in the corresponding region. Because the front panel 33 is normally formed of the ABS resin, paint containing copper or nickel powders dissolved in a solvent such as toluene, methyl ethyl ketone, or thinner is used for the conductive film 58', as described above. The paint is applied by spray-coating or silk screen process printing.

It is also effective to apply a metal plating or conductive coating to the front panel 33, which is normally a simple plastic molding.

While these measures will significantly shield electrostatic noise, noise around the voltage supply terminal of the fluorescent lamp 40 can be effectively reduced further by providing a transparent film 59 with an indium oxide coating over the dispersion panel 36 and grounding the film 59.

Because the electrostatic noise from the lamp drive power supply circuit 38 (see Fig. 5) is also high, it is also effective to shield the lamp drive power supply circuit 38.

Any one of the above measures described above is effective, the effect can be further enhanced by combining a number of these.

The radiofrequency field causing electrostatic noise is well shielded by a shield electrode as described above. As a result, an induction voltage caused by such a radiofrequency field can be prevented, and errors in detecting the coordinates of the detection pen tip can be prevented. Furthermore, a separately provided place for the shield electrode is not required.

Although the above was described in connection with the display-integrated type tablet apparatus, the above radiofrequency shielding methods are applicable to any electrostatic induction-type tablet apparatus having a display function wherein the display panel is backlit.

The above has described examples wherein electrostatic noise is prevented from occurring by shielding the radiofrequency field with a shield electrode. The following describes embodiments of the invention wherein electrostatic noise is prevented from occurring by controlling lighting of the backlight.

The following embodiment completely eliminates electrostatic noise by eliminating the generation of a radiofrequency field from the backlight and voltage application means.

In the display-integrated type tablet apparatus shown in Fig. 2, the apparatus is driven using time-share processing alternating between the display period B and the coordinate detection period A as shown in Fig. 14. With this drive method, it is only necessary to illuminate the liquid crystal panel 11 by means of the backlight during the display period B. In light of this, in a display-integrated type tablet according to an embodiment of the present invention, which is shown in Fig. 9, power is supplied to light the backlight only during the display period B as shown in Fig. 15, and the power supply is cut off to turn off the backlight during the coordinate detection period A. Note that similar parts in Figs. 2 and 9 are indicated by the same reference numerals and further description on those parts is omitted here.

Referring to Fig. 9, a backlight voltage application circuit 61 is connected between the DC power supply circuit 22 and the backlight 60 such as a fluorescent lamp. The backlight voltage application circuit 61 is an inverter circuit including an internal oscillation circuit (not shown) and a step-up trasformer (not shown) to convert the DC voltage supplied from the power supply circuit 22 to AC voltage. The backlight voltage application circuit 61 also has an internal switch circuit 61a which is controlled by a control signal "a" from the control circuit 17 to be turned on and off so that the AC voltage is applied to the backlight 60 only during the display period as shown in Fig. 15.

The time is split between the display period B and the coordinate detection period A during one frame period in this display-integrated type tablet apparatus so that the display period B is a minimum 95% and the coordinate detection period A consisting from an x-coordinate detection period Ax and a y-coordinate detection period Ay is a maximum 5% of the total process time. Therefore, even though the backlight 60 is turned off for several hundred microseconds, which is the time allocated to the coordinate detection period A, the backlight 60 immediately lights when the AC voltage is applied from the backlight voltage application circuit 61 to the backlight 60 during the subsequent display period.

As a result, there is no perceptible effect on the image displayed on the liquid crystal panel 11 during the display period B, and electrostatic noise caused by the radiofrequency field of the AC voltage is not generated during the coordinate detection period A. The tip coordinates of the detection pen 18 can therefore be precisely detected.

To further enhance this effect, the following measures may be taken.

Specifically, electrostatic noise occurs easily when turning the AC voltage on or off by means of the switching circuit 61a in the backlight voltage application circuit 61 if the timing of the on/off operation is near the peak AC voltage applied to the backlight 60. To prevent this, the present embodiment turns the switching circuit 61a off to turn the backlight 60 off at the beginning of the coordinate detection period A, more specifically the x-coordinate detection period Ax, and begins scanning the segment electrodes X or common electrodes Y at a predetermined period after the backlight turns off. Although the predetermined period depends on characteristics of the operational amplifier 19 which amplifies a signal detected by the detection pen 18, test apparatuses have required at least 10 microseconds as the predetermined period. On the other hand, scanning the segment electrodes X or common electrodes Y is stopped at a predetermined period before the display period B starts, and the switching circuit 61a is turned on to turn the backlight 60 on simultaneous with the start of the display period B.

Electrostatic noise, therefore, does not occur during the coordinate detection period A because the switching circuit 61a is not switched on/off during the coordinate detection.

The switching circuit 61a may be turned off only during the y-coordinate detection period Ay as shown in Fig. 17. The reason for it is that the lower electrodes (common electrodes Y in Fig. 9) viewed from the detection pen 18 define y coordinates. As described above, induction voltages from the upper electrodes (segment electrodes X in Fig. 9) defining x coordinates are so high that the induction voltage of the detection pen 18 from the backlight 60 raises no problem in detecting x coordinates. Accordingly, it will be easily understood that if the lower electrodes are x-coordinate electrodes, then the switching circuit 61a should be turned off only during the x-coordinate detection period Ax.

When a fluorescent lamp is used for the backlight 60, the off operation timing of the switching circuit 61a can be adjusted to immediately before the transition from the display period to the coordinate detection period. There is no effect on the displayed image in this case even if the switching circuit is turned off and fluorescent lamp discharge is stopped because the fluorescence is sustained by the persistence characteristic of the fluorescent body. There is also virtually no effect on coordinate detection using the detection pen 18.

The above has described the timing of the on/off operation of the backlight 60 through the on/off operation of the switching circuit 61a in the backlight voltage application circuit 61 of the display-integrated type tablet apparatus with a liquid crystal panel 11 having a plurality of segment electrodes X and a plurality of common electrodes Y to which is applied a so-called duty-type drive method. The above-described method as shown in Fig. 15 is applicable to a display-integrated type tablet apparatus with a liquid crystal panel of a so-called active matrix type shown in Fig. 10, wherein source electrodes S₁-Sₘ intersect gate electrodes G₁-Gₙ and in respective intersections are provided thin-film transistors 125 whose respective gates and sources are connected with the gate and source electrodes G₁-Gₙ, S₁-Sₘ and whose respective drains are connected with a plurality of pixel electrodes 124 disposed in a matrix pattern on one side of the liquid crystal panel 111. In Fig. 10, reference numeral 112 indicates a gate drive circuit for driving the gate electrodes G₁-Gₙ and reference numeral 113 indicates a source drive circuit for driving the source electrodes S₁-Sₘ. Reference numerals 114, 115, 116, 117, 120 and 121 are respectively a selector, display controller, detection controller, control circuit, x coordinate detection circuit and y coordinate detection circuit having functions similar to those of the selector 14, display controller 15, detection controller 16, control circuit 17, x coordinate detection circuit 20 and y coordinate detection circuit 21 of Fig. 9 and detailed description is omitted here. In this display-integrated type tablet apparatus as well, the switching circuit 61 is turned on or off in response to a control signal "a" from the control circuit 117, as described above in connection with the display-integrated type tablet apparatus of Fig. 9.

Furthermore, the above method is also applicable to the input apparatus of the type that a tablet 1 is superimposed on a display panel 101 as shown in Fig. 11. Note that similar parts in Figs. 1 and 11 are indicated by the same reference numbers and further description is omitted here. The switching circuit 61a of the backlight voltage application circuit 61 is turned on and off by a control signal from the timing generator 6 so that the backlight 60 is turned off during the coordinate detection period of the tablet 1.

In these apparatuses of Figs. 10 and 11 also, the switching circuit 61a may be turned off to turn the backlight 60 off at the beginning of the coordinate detection period A and begin scanning the detection electrodes (source electrodes or gate electrodes; column electrodes or row electrodes) at a predetermined period after the backlight turns off, so that noise produced during the on/off operations of the switching circuit 61 is prevented.

Such noise produced during the on/off operations of the switching circuit 61a can also be avoided by the following methods.

Figs. 12 is a block diagram of the backlight drive circuitry to be replaced with the backlight drive circuitry of Figs. 9-11 including the backlight voltage application circuit 61 whose switch circuit 61a is turned on and off in response to the control signal from the control circuit 17, 117 or the timing generator 6. The backlight drive circuitry of Fig. 12 includes a backlight voltage application circuit 62 which has an internal oscillation circuit 62a and step-up transformer (not shown in the figure) as the backlight voltage application circuit 61 of Figs. 9-11 does. The backlight voltage application circuit 62, however, does not have a switching circuit, unlike the backlight voltage application circuit 61. The backlight voltage application circuit 62 is driven by a DC voltage supplied from a power supply circuit 63 which may be the DC power supply circuit 22 of Figs. 9 and 10.

A control signal "b" output from the control circuit 17 (or 117, or the timing generator 6) in Fig. 9 (or Fig. 10 or Fig. 11) is input to the backlight voltage application circuit 62. It is to be noted that the control signal supply timing can be shifted using additional circuitry.

In the noise avoiding method according to Fig. 12, the phase of the AC voltage applied to the backlight 60 is controlled by controlling the oscillation start and stop of the oscillation circuit 62a in the backlight voltage application circuit 62 with the control signal "b". As a result, as shown in Fig. 16, the AC voltage for turning the backlight 60 on can start (rise) from 0 V and stop at 0 V, and noise is therefore not produced when the backlight 60 switches on and off.

Fig. 13 is a block diagram of further backlight drive circuitry to be replaced with the backlight drive circuitry of Figs. 9-11. The backlight drive circuitry of Fig. 13 includes a backlight voltage application circuit 64 which has an internal oscillation circuit and step-up transformer (neither shown in the figure). This backlight voltage application circuit 64 does not have a switching circuit, like the backlight voltage application circuit 62 of Fig. 12. The backlight voltage application circuit 64 is driven by a DC voltage supplied from a power supply circuit 65.

A control signal "c" output from the control circuit 17 (or 117, or the timing generator 6) in Fig. 9 (or Fig. 10 or Fig. 11) is input to the power supply circuit 65. It is to be noted that the control signal supply timing can be shifted using additional circuitry.

In the backlight drive circuitry control method shown in Fig. 13, a control function is built in to the power supply circuit 65 for switching the DC voltage supplied to the backlight voltage application circuit 64 on or off. The output of the backlight voltage application circuit 64 oscillation circuit therefore rises with the rise in the voltage supplied from the power supply circuit 65, and the AC voltage for the backlight 60 rises at 0 V as shown in Fig. 16. On the other hand, because the oscillation circuit output also stops at the drop in the voltage supplied from the power supply circuit 65, the AC voltage for the backlight 60 stops at 0 V as shown in Fig. 16.

Noise does therefore not occur during on/off operation of the backlight 60.

It is to be noted that in actual circuitry adopting the method of controlling the backlight on/off operation through control of a power supply circuit which supplies a DC voltage, as shown in Fig. 13, an AC voltage applied to the backlight 60 often becomes as shown in Fig. 18. In this case, the backlight on/off timing will be between those shown in Fig. 15 and Fig. 17. Accordingly, it is often difficult to say which of the backlight on/off control timings of Fig. 15 and Fig. 17 is adopted for the actual circuitry.

Noise can be avoided by a still another method. In this method, a semiconductor switching circuit (not shown) is provided between the backlight 60 and a backlight voltage application circuit similar to the backlight voltage application circuit 64. The backlight voltage application circuit is normally driven, and the on/off operation of the semiconductor switching circuit is controlled by a control signal, which is supplied from the control circuit 17 (or 117 or the timing generator 6) shown in Fig. 9, 10 or 11 to turn the backlight on and off.

The AC voltage supplied to the backlight 60 is therefore switched on and off at a 0-V level as shown in Fig. 16 in a so-called "zero cross switching" operation. Noise does not occur during the backlight on/off operation because of this operating method.

In the above methods, the electrostatic noise is prevented from occurring by turning the backlight off during the coordinate detection period so that a radiofrequency field is not generated from the backlight and drive circuitry therefor during the coordinate detection period. Alternatively, effects of the radiofrequency field produced from the backlight and drive circuitry therefor can be also eliminated in the following manner.

To avoid the effects of the AC voltage applied to turn the backlight on, the frequency of the AC voltage for backlight illumination is set to a frequency sufficiently separated from a frequency band of frequency components of the induction voltage induced to the detection pen 7 or 18 by scanning pulses.

While frequency bands of amplifiers (not shown in the figures) provided in the x-coordinate detection circuit 9, 20, or 120 and the y-coordinate detection circuit 10, 21, or 121 are adjusted to the frequency band of the frequency components of the induction voltage induced to the detection pen 7, 18, the AC voltage for the backlight illumination is set to a frequency sufficiently removed from the frequency band of these amplifiers. For example, when the optimum frequency band of the amplifiers of the x-coordinate detection circuit 9, 20, or 120 and y-coordinate detection circuit 10, 21, or 121 is 30 - 100 kHz, the frequency of the backlight illumination voltage is set to around 3 kHz.

As a result of this frequency difference, most of the electrostatic noise components superimposed from the backlight and peripheral components to the detection signal of the detection pen 7, 18 can be effectively removed by the amplifiers.

It is to be noted that the above embodiments are described using liquid crystals for the display material, but the invention shall not be so limited. The invention can be applied to tablet apparatuses comprising a display function achieved using other display materials for a non-light-emitting display such as electrochromic display materials.

The invention being thus described, it will be obvious that the same may be varied in many ways.

## Claims

1. A tablet apparatus of an electrostatic induction type with a display function for inputting coordinates of a position indicated by an associated indicating means (7, 18) and displaying an image at the inputted coordinates, comprising:
a display panel (11, 101, 111) for displaying the image, which incorporates a light emissions source (40, 60) acting as a backlight illuminating said display panel (11, 101, 111) from behind and driven by an alternating current (AC) voltage;
a voltage application means (38, 61, 62, 63, 64, 65) for supplying said AC voltage to said light emissions source (40, 60); and
means for inhibiting electrostatic noise resulting from a radiofrequency field generated from said light emissions source (40, 60) and voltage application means (38, 61, 62, 63, 64, 65),
characterised in that the tablet apparatus is operated by a time-sharing method alternating between a coordinate detection period (A) during which coordinates of a position indicated by said associated indicating means (7, 18) is detected by sequentially scanning a plurality of first electrodes (X₁-X₄₀, S₁-Sₘ, X₁-Xₘ) and a plurality of second electrodes (Y₁-Y₈, G₁-Gₙ, Y₁-Yₙ) perpendicular to said first electrodes (X₁-X₄₀, S₁-Sₘ, X₁-Xₘ) and a display period (B) during which an image is displayed on said display panel (11, 101, 111) at a position corresponding to the position detected in the coordinate detection period, and wherein said means for inhibiting electrostatic noise comprises a control means (6, 17, 117) for controlling said voltage application means (61, 62, 63, 64, 65) such that said light emissions source (60) lights during the display period and does not light during the coordinate detection period.

2. The tablet apparatus according to Claim 1, wherein said display panel is a liquid crystal display panel (11, 101, 111).

3. The tablet apparatus according to Claim 1 or Claim 2, wherein scanning of said electrodes (X₁-X₄₀, S₁-Sₘ, X₁-Xₘ; Y₁-Y₈, G₁-Gₙ, Y₁-Yₙ) is started a predetermined time after application of the AC voltage to said light emissions source (60) by said voltage application means (61, 62, 64) is stopped, and the application of the AC voltage to said light emissions source (60) by said voltage application means (61, 62, 64) is started a predetermined time after the scanning of said electrodes is stopped.

4. The tablet apparatus according to any one of Claims 1 to 3, wherein said voltage application means (62, 63, 64, 65) includes a power supply circuit (63, 65) for supplying a direct current (DC) voltage and an inverter circuit (62, 64) for converting the direct current voltage received from the power supply circuit (63, 65) to the alternating current voltage, and said control means (17, 117) controls one of said inverter circuit (62) and power supply circuit (65) such that the AC voltage supplied to said light emissions source (60) starts from 0 volts and stop at 0 volts.

5. The tablet apparatus according to Claim 1 or Claim 2 further comprising:
a detection pen (18) at a tip of which is disposed an electrode (18a) electrostatically connected to said first and second electrodes (X₁-X₄₀, S₁-Sₘ; Y₁-Y₈, G₁-Gₙ);
a first drive circuit (13, 113) for driving said first electrodes (X₁-X₄₀, S₁-Sₘ);
a second drive circuit (12, 112) for driving said second electrodes (Y₁-Y₈, G₁-Gₙ);
a display control circuit (15, 115) for controlling said first and second drive circuits (13, 113; 12, 112) during a display period of the apparatus to display an image on said display panel (11, 111);
a detection control circuit (16, 116) for controlling at least one of said first and second drive circuits (13, 113; 12, 112) to sequentially scan the corresponding electrodes (X₁-X₄₀, S₁-Sₘ; Y₁-Y₈, G₁-Gₙ) during a coordinate detection period of the apparatus;
a coordinate detection circuit (20, 21, 120, 121) for detecting coordinates on said display panel (11, 111) specified by the detection pen tip (18a) based on timing of generation of an output signal (Siv) from said detection pen (18) and timing of scanning of said electrodes (X₁-X₄₀, S₁-Sₘ; Y₁-Y₈, G₁-Gₙ) ;
a control circuit (17, 117) for controlling said display control circuit (15, 115), detection control circuit (16, 116), coordinate detection circuit (20, 21, 120, 121), and voltage application means (61, 61a, 62, 62a, 65) to a) alternately set the display period (B) and coordinate detection period (A), b) display the image on said display panel (11, 111) during the display period (B), and c) detect the coordinates of the detection pen tip on said display panel (11, 111) during the coordinate detection period (A).

6. The tablet apparatus according to Claim 5, wherein said control circuit (17, 117) controls said detection control circuit (16, 116) and voltage application circuit (61) such that electrode scanning by said detection control circuit (16, 116) begins a predetermined time after application of the alternating current voltage to said lighting means (60) from said voltage application means (61) stops, and application of the alternating current voltage to said lighting means (60) by said voltage application circuit (61) begins a predetermined time after electrode scanning by said detection control circuit (16, 116) finishes.

7. The tablet apparatus according to Claim 5, wherein said display panel (11) is provided with segment electrodes (X₁-X₄₀) and common electrodes (Y₁-Y₈) and is driven by a duty-type driving method.

8. The display-integrated type tablet apparatus according to Claim 5, wherein said display panel (111) is of an active matrix type, and is provided with source electrodes (S₁-Sₘ) and gate electrodes (G₁-Gₙ) at intersections of which are provided transistors (125) whose respective sources and gates are connected to said source and gate electrodes (S₁-Sₘ, G₁-Gₙ) and whose respective drains are connected to pixel electrodes (124) provided in a matrix pattern.

9. A tablet apparatus of an electrostatic induction type with a display function for inputting coordinates of a position indicated by an associated indicating means (7, 18) and displaying an image at the inputted coordinates, comprising:
a display panel (11, 101, 111) for displaying the image, which incorporates a light emissions source (40, 60) acting as a backlight illuminating said display panel (11, 101, 111) from behind and driven by an alternating current (AC) voltage;
a voltage application means (38, 61, 62, 63, 64, 65) for supplying said AC voltage to said light emissions source (40, 60); and
means for eliminating electrostatic noise resulting from a radiofrequency field generated from said light emissions source (40, 60) and voltage application means (38, 61, 62, 63, 64, 65),
characterised in that the tablet apparatus is operated by a time-sharing method alternating between a coordinate detection period (A) during which coordinates of a position indicated by said associated indicating means (18) is detected by sequentially scanning a plurality of first electrodes (X₁-X₄₀) and a plurality of second electrodes (Y₁-Y₈) perpendicular to said first electrodes (X₁-X₄₀) and a display period (B) during which an image is displayed on said display panel (11) at a position corresponding to the position detected in the coordinate detection period, said coordinate detection period (A) consisting of an x-coordinate detection period (A_{X}) during which said first electrodes (X₁-X₄₀) are scanned and a y-coordinate detection period (A_{Y}) during which said second electrodes (Y₁-Y₈) are scanned, and wherein said means for eliminating electrostatic noise comprises a control means (17) for controlling said voltage application means (61, 62, 63, 64, 65) such that said light emissions source (60) is turned off only during the y-coordinate detection period (A_{Y}) when the second electrodes (Y₁-Y₈) are lower electrodes as viewed from said indicating means (18) and that said light emissions source (60) is turned off only during the x-coordinates detection period (A_{X}) if the first electrodes (X₁-X₄₀) are the lower electrodes.

## Patentansprüche

1. Digitalisiertablett vom Typ mit elektrostatischer Induktion mit Anzeigefunktion, zum Eingeben von Koordinaten einer durch eine zugehörige Zeigereinrichtung (7, 18) spezifizierten Position und zum Anzeigen eines Bilds an den eingegebenen Koordinaten, mit:
- einer Anzeigetafel (11, 101, 111) zum Anzeigen des Bilds, die eine Lichtemissionsquelle (40, 60) aufweist, die als die Anzeigetafel (11, 101, 111) von hinten beleuchtende Hintergrundbeleuchtung wirkt und durch eine Wechselspannung (AC) angesteuert wird;
- einer Spannungsanlegeeinrichtung (38, 61, 62, 63, 64, 65) zum Liefern der Wechselspannung an die Lichtemissionsquelle (40, 60); und
- einer Einrichtung zum Sperren elektrostatischer Störsignale, wie sie sich aus einem hochfrequenten Feld ergeben, das von der Lichtemissionsquelle (40, 60) und der Spannungsanlegeeinrichtung (38, 61, 62, 63, 64, 65) erzeugt wird;
- **dadurch gekennzeichnet, dass** das Digitalisiertablett durch ein Zeitmultiplexverfahren betrieben wird, das zwischen einer Koordinatenerfassungsperiode (A), während der die Koordinaten der durch die zugehörige Zeigereinrichtung (7, 18) gekennzeichneten Position durch sequentielles Abrastern einer Anzahl erster Elektroden (X₁ - X₄₀, S₁ - Sₘ, X₁ - Xₘ) und einer Anzahl zweiter Elektroden (Y₁ - Y₈, G₁ - Gₙ, Y₁ - Yₙ) rechtwinklig zu den ersten Elektroden (X₁ - X₄₀, S₁ - Sₘ, X₁ - Xₘ) erfasst werden, und einer Anzeigeperiode (B) wechselt, während der ein Bild auf der Anzeigetafel (11, 101, 111) an einer Position angezeigt wird, die der in der Koordinatenerfassungsperiode erfassten Position entspricht, und wobei die Einrichtung zum Sperren elektrostatischer Störsignale eine Steuerungseinrichtung (6, 17, 117) zum Steuern der Spannungsanlegeeinrichtung (61, 62, 63, 64, 65) in solcher Weise aufweist, dass die Lichtemissionsquelle (60) während der Anzeigeperiode leuchtet, wohingegen sie während der Koordinatenerfassungsperiode nicht leuchtet.

2. Digitalisiertablett nach Anspruch 1, bei dem die Anzeigetafel eine Flüssigkristalldisplay-Tafel (11, 101, 111) ist.

3. Digitalisiertablett nach Anspruch 1 oder Anspruch 2, bei dem das Abrastern der Elektroden (X₁ - X₄₀, S₁ - Sₘ, X₁ - Xₘ; Y₁ - Y₈, G₁ - Gₙ, Y₁ -Yₙ) gestartet wird, nachdem nach dem Anhalten der Wechselspannung an die Lichtemissionsquelle (60) durch die Spannungsanlegeeinrichtung (61, 62, 64) eine vorbestimmte Zeit verstrichen ist, und das Anlegen der Wechselspannung an die Lichtemissionsquelle (60) durch die Spannungsanlegeeinrichtung (61, 62, 64) gestartet wird, nachdem nach dem Anhalten des Durchrasterns der Elektroden eine vorbestimmte Zeit verstrichen ist.

4. Digitalisiertablett nach einem der Ansprüche 1 bis 3, bei dem die Spannungsanlegeeinrichtung (62, 63, 64, 65) eine Spannungsversorgungsschaltung (63, 65) zum Liefern einer Gleichspannung (DC) und eine Wechselrichterschaltung (62, 64) zum Umsetzen der von der Spannungsversorgungsschaltung (63, 65) erhaltenen Gleichspannung in die Wechselspannung aufweist, und die Steuerungseinrichtung (17, 117) die Wechselrichterschaltung (62) oder die Spannungversorgungsschaltung (65) so steuert, dass die an die Lichtemissionsquelle (60) gelieferte Wechselspannung bei 0 V beginnt und bei 0 V endet.

5. Digitalisiertablett nach Anspruch 1 oder Anspruch 2, ferner mit:
- einem Erfassungsstift (18), an dessen Spitze eine Elektrode (18a) angeordnet ist, die elektrostatisch mit den ersten und zweiten Elektroden (X₁ - X₄₀, S₁ - Sₘ, Y₁ - Y₈, G₁ - Gₙ) gekoppelt ist;
- einer ersten Treiberschaltung (13, 113) zum Ansteuern der ersten Elektroden (X₁ - X₄₀, S₁ - Sₘ);
- einer zweiten Treiberschaltung (12, 112) zum Ansteuern der zweiten Elektroden (Y₁ - Y₈, G₁ - Gₙ);
- einer Anzeigesteuerschaltung (15, 115) zum Steuern der ersten und zweiter Treiberschaltung (13, 113, 12, 112) während der Anzeigeperiode des Geräts, um ein Bild auf der Anzeigetafel (11, 111) anzuzeigen;
- einer Erfassungssteuerschaltung (16, 116) zum Steuern der ersten und/oder zweiten Treiberschaltung zum sequentiellen Durchrastern der entsprechenden Elektroden (X₁ - X₄₀, S₁ - Sₘ; Y₁ - Y₈, G₁ - Gₙ) während einer Koordinatenerfassungsperiode des Geräts;
- einer Koordinatenerfassungsschaltung (20, 21, 120) zum Erfassen von Koordinaten auf der Anzeigetafel (11, 111), wie durch die Spitze (18a) des Erfassungsstifts spezifiziert, und zwar auf Grundlage der zeitlichen Lage der Erzeugung eines Ausgangssignals (Siv) des Erfassungsstifts (18) sowie der zeitlichen Lage des Abrasterns der Elektroden (X₁ - X₄₀, S₁ - Sₘ; Y₁ - Y₈, G₁ - Gₙ);
- einer Steuerschaltung (17, 117) zum Steuern der Anzeigesteuerschaltung (15, 115), der Erfassungssteuerschaltung (16, 116), der Koordinatenerfassungsschaltung (20, 21, 120, 121) und der Spannungsanlegeeinrichtung (61, 61a, 62, 62a, 65), um a) die Anzeigeperiode (B) und die Koordinatenerfassungsperiode (A) abwechselnd einzustellen und b) während der Anzeigeperiode (B) das Bild auf der Anzeigetafel (11, 111) anzuzeigen und c) während der Koordinatenerfassungsperiode (A) die Koordinaten der Spitze des Erfassungsstifts auf der Anzeigetafel (11, 111) zu erfassen.

6. Digitalisiertablett nach Anspruch 5, bei dem die Steuerschaltung (17, 117) die Erfassungssteuerschaltung (16, 116) und die Spannungsanlegeschaltung (61) so steuert, dass das Abrastern von Elektroden durch die Erfassungssteuerschaltung (16, 116) beginnt, nachdem nach dem Beenden des Anlegens der Wechselspannung an die Beleuchtungseinrichtung (60) von der Spannungsanlegeeinrichtung (61) eine vorbestimmte Zeit verstrichen ist, und das Anlegen der Wechselspannung an die Beleuchtungseinrichtung (60) durch die Spannungsanlegeschaltung (61) beginnt, nachdem nach dem Beenden des Elektrodendurchrasterns durch die Erfassungssteuerschaltung (16, 116) eine vorbestimmte Zeit verstrichen ist.

7. Digitalisiertablett nach Anspruch 5, bei dem die Anzeigetafel (11) mit Segmentelektroden (X₁ - X₄₀) und gemeinsamen Elektroden (Y₁ - Y₈) versehen ist und sie durch ein Tastverhältnis-Ansteuerungsverfahren angesteuert wird.

8. Digitalisiertablett vom Typ mit integrierter Anzeige nach Anspruch 5, bei dem die Anzeigetafel (111) vom Aktivmatrixtyp ist und sie mit Sourceelektroden (S₁ - S₈) und Gateelektroden (G₁ - Gₙ) versehen ist, an deren Schnittstellen Transistoren (125) vorhanden sind, deren jeweilige Sources und Gates mit den Source- bzw. Gateelektroden (S₁ - Sₘ, G₁ - Gₙ) verbunden sind und deren jeweilige Drains mit in einem Matrixmuster vorhandenen Pixelelektroden (124) verbunden sind.

9. Digitalisiertablett vom Typ mit elektrostatischer Induktion mit Anzeigefunktion, zum Eingeben von Koordinaten einer durch eine zugehörige Zeigereinrichtung (7, 18) spezifizierten Position und zum Anzeigen eines Bilds an den eingegebenen Koordinaten, mit:
- einer Anzeigetafel (11, 101, 111) zum Anzeigen des Bilds, die eine Lichtemissionsquelle (40, 60) aufweist, die als die Anzeigetafel (11, 101, 111) von hinten beleuchtende Hintergrundbeleuchtung wirkt und durch eine Wechselspannung (AC) angesteuert wird;
- einer Spannungsanlegeeinrichtung (38, 61, 62, 63, 64, 65) zum Liefern der Wechselspannung an die Lichtemissionsquelle (40, 60); und
- einer Einrichtung zum Sperren elektrostatischer Störsignale, wie sie sich aus einem hochfrequenten Feld ergeben, das von der Lichtemissionsquelle (40, 60) und der Spannungsanlegeeinrichtung (38, 61, 62, 63, 64, 65) erzeugt wird;
- **dadurch gekennzeichnet, dass** das Digitalisiertablett durch ein Zeitmultiplexverfahren betrieben wird, das zwischen einer Koordinatenerfassungsperiode (A), während der die Koordinaten einer durch die zugehörige Zeigereinrichtung (18) gekennzeichneten Position durch sequentielles Abrastern einer Anzahl erster Elektroden (X₁ - X₄₀) und einer Anzahl zweiter Elektroden (Y₁ - Y₈) rechtwinklig zu den ersten Elektroden (X₁ - X₄₀) erfasst wird, und einer Anzeigeperiode (b) umschaltet, während der ein Bild auf der Anzeigetafel (11) an einer Position angezeigt wird, die der in der Koordinatenerfassungsperiode erfassten Position entspricht, wobei die Koordinatenerfassungsperiode (A) aus einer x-Koordinatenerfassungsperiode (Aₓ), während der die ersten Elektroden (X₁ -X₄₀) durchgerastert werden, und einer y-Koordinatenerfassungsperiode (A_{y}), während der die zweiten Elektroden (Y₁ -Y₈) durchgerastert werden, besteht, und wobei die Einrichtung zum Beseitigen elektrostatischer Störsignale eine Steuerungseinrichtung (17) aufweist, um die Spannungsanlegeeinrichtung (61, 62, 63, 64, 65) dann, wenn die zweiten Elektroden (Y₁ - Y₈) gesehen von der Zeigereinrichtung (18) her untere Elektroden sind, so zu steuern, dass die Lichtemissionsquelle (60) nur während der y-Koordinatenerfassungsperiode (A_{y}) ausgeschaltet wird, und dann, wenn die ersten Elektroden (X₁ - X₄₀) die unteren Elektroden sind, die Lichtemissionsquelle (60) nur während der x-Koordinatenerfassungsperiode (Aₓ) ausgeschaltet wird.

## Revendications

1. Tablette de type à induction électrostatique avec une fonction d'affichage, pour entrer des coordonnées d'une position indiquée par un moyen d'indication associé (7, 18) et afficher une image au niveau des coordonnées entrées, comprenant:
un panneau d'affichage (11, 101, 111) pour afficher l'image, qui comporte une source d'émission de lumière (40, 60) fonctionnant comme un rétro-éclairage pour éclairer par derrière ledit panneau d'affichage (11, 101, 111) et attaquée par une tension alternative;
un moyen d'application de tension (38, 61, 62, 63, 64, 65) pour fournir ladite tension alternative à ladite source d'émission de lumière (40, 60); et
un moyen pour supprimer un bruit électrostatique résultant d'un champ haute fréquence produit par ladite source d'émission de lumière (40, 60) et ledit moyen d'application de tension (38, 61, 62, 63, 64, 65),
caractérisé en ce que la tablette est commandée selon un procédé à multiplexage temporel qui effectue une alternance entre une période de détection de coordonnées (A) pendant laquelle des coordonnées d'une position indiquée par ledit moyen d'indication associé (7, 18) sont détectées en balayant séquentiellement une pluralité de premières électrodes (X₁ à X₄₀, S₁ à Sₘ, X₁ à Xₘ) et une pluralité de secondes électrodes (Y₁ à Y₈, G₁ à Gₙ, Y₁ à Yₙ) perpendiculaires auxdites premières électrodes (X₁ à X₄₀, S₁ à Sₘ, X₁ à Xₘ) et une période d'affichage (B) pendant laquelle une image est affichée sur ledit panneau d'affichage (11, 101, 111) à une position correspondant à la position détectée dans la période de détection de coordonnées, et dans laquelle ledit moyen pour supprimer un bruit électrostatique comprend un moyen de commande (6, 17, 117) pour commander ledit moyen d'application de tension (61, 62, 63, 64, 65) de telle manière que ladite source d'émission de lumière (60) éclaire pendant la période d'affichage et n'éclaire pas pendant la période de détection de coordonnées.

2. Tablette selon la revendication 1, dans laquelle ledit panneau d'affichage est un panneau d'affichage à cristaux liquides (11, 101, 111).

3. Tablette selon la revendication 1 ou 2, dans laquelle un balayage desdites électrodes (X₁ à X₄₀, S₁ à Sₘ, X₁ à Xₘ; Y₁ à Y₈, G₁ à Gₙ, Y₁ à Yₙ) est démarré un temps prédéterminé après l'arrêt d'une application de la tension alternative à ladite source d'émission de lumière (60) par ledit moyen d'application de tension (61, 62, 64), et l'application de la tension alternative à ladite source d'émission de lumière (60) par ledit moyen d'application de tension (61, 62, 64) est démarrée un temps prédéterminé après l'arrêt du balayage desdites électrodes.

4. Tablette selon l'une quelconque des revendications 1 à 3, dans laquelle ledit moyen d'application de tension (62, 63, 64, 65) comprend un circuit d'alimentation (63, 65) pour fournir une tension continue et un circuit convertisseur (62, 64) pour convertir la tension continue reçue du circuit d'alimentation (63, 65) en une tension alternative, et ledit moyen de commande (17, 117) commande l'un dudit circuit convertisseur (62) et dudit circuit d'alimentation (65) de telle manière que la tension alternative fournie à ladite source d'émission de lumière (60) démarre à 0 volts et s'arrête à 0 volts.

5. Tablette selon la revendication 1 ou 2, comprenant également:
un crayon de détection (18) ayant une pointe au niveau de laquelle est disposée une électrode (18a) couplée de manière électrostatique auxdites premières et secondes électrodes (X₁ à X₄₀, S₁ à Sₘ; Y₁ à Y₈, G₁ à Gₙ);
un premier circuit d'attaque (13, 113) pour attaquer lesdites premières électrodes (X₁ à X₄₀, S₁ à Sₘ);
un second circuit d'attaque (12, 112) pour attaquer lesdites secondes électrodes (Y₁ à Y₈; G₁ à Gₙ);
un circuit de commande d'affichage (15, 115) pour commander lesdits premier et second circuits d'attaque (13, 113; 12, 112) pendant une période d'affichage de la tablette afin d'afficher une image sur ledit panneau d'affichage (11, 111);
un circuit de commande de détection (16, 116) pour commander au moins l'un desdits premier et second circuits d'attaque (13, 113; 12, 112) afin de balayer séquentiellement les électrodes correspondantes (X₁ à X₄₀, S₁ à Sₘ; Y₁ à Y₈, G₁ à Gₙ) pendant une période de détection de coordonnées de la tablette;
un circuit de détection de coordonnées (20, 21, 120, 121) pour détecter des coordonnées sur ledit panneau d'affichage (11, 111) spécifiées par la pointe (18a) du crayon de détection en fonction d'un cadencement de production d'un signal de sortie (Siv) dudit crayon de détection (18) et d'un cadencement de balayage desdites électrodes (X₁ à X₄₀, S₁ à Sₘ; Y₁ à Y₈, G₁ à Gₙ);
un circuit de commande (17, 117) pour commander lesdits circuit de commande d'affichage (15, 115), circuit de commande de détection (16, 116), circuit de détection de coordonnées (20, 21, 120, 121), et moyen d'application de tension (61, 61a, 62, 62a, 65) pour a) activer alternativement la période d'affichage (B) et la période de détection de coordonnées (A), b) afficher l'image sur ledit panneau d'affichage (11, 111) pendant la période d'affichage (B), et c) détecter les coordonnées de la pointe du crayon de détection sur ledit panneau d'affichage (11, 111) pendant la période de détection de coordonnées (A).

6. Tablette selon la revendication 5, dans laquelle ledit circuit de commande (17, 117) commande ledit circuit de commande de détection (16, 116) et ledit circuit d'application de tension (61) de telle manière qu'un balayage des électrodes par ledit circuit de commande de détection (16, 116) commence un temps prédéterminé après l'arrêt d'une application de la tension alternative audit moyen d'éclairage (60) par ledit moyen d'application de tension (61), et l'application de la tension alternative audit moyen d'éclairage (60) par ledit circuit d'application de tension (61) démarre un temps prédéterminé après la fin d'un balayage des électrodes par ledit circuit de commande de détection (16, 116).

7. Tablette selon la revendication 5, dans laquelle ledit panneau d'affichage (11) est muni d'électrodes de segment (X₁ à X₄₀) et d'électrodes communes (Y₁ à Y₈) et est attaqué selon un procédé d'attaque de type cyclique.

8. Tablette de type à affichage intégré selon la revendication 5, dans laquelle ledit panneau d'affichage (111) est de type à matrice active, et est muni d'électrodes de source (S₁ à Sₘ) et d'électrodes de grille (G₁ à Gₙ) ayant des intersections où sont prévus des transistors (125) dont des sources et grilles respectives sont connectées auxdites électrodes de source et grille (S₁ à Sₘ, G₁ à Gₙ) et dont des drains respectifs sont connectés à des électrodes de pixel (124) prévues selon un motif en matrice.

9. Tablette de type à induction électrostatique avec une fonction d'affichage, pour entrer des coordonnées d'une position indiquée par un moyen d'indication associé (7, 18) et afficher une image au niveau des coordonnées entrées, comprenant:
un panneau d'affichage (11, 101, 111) pour afficher l'image, qui comporte une source d'émission de lumière (40, 60) fonctionnant comme un rétro-éclairage pour éclairer par derrière ledit panneau d'affichage (11, 101, 111) et attaquée par une tension alternative;
un moyen d'application de tension (38, 61, 62, 63, 64, 65) pour fournir ladite tension alternative à ladite source d'émission de lumière (40, 60); et
un moyen pour supprimer un bruit électrostatique résultant d'un champ haute fréquence produit par ladite source d'émission de lumière (40, 60) et ledit moyen d'application de tension (38, 61, 62, 63, 64, 65),
caractérisé en ce que la tablette est commandée selon un procédé à multiplexage temporel qui effectue une alternance entre une période de détection de coordonnées (A) pendant laquelle des coordonnées d'une position indiquée par ledit moyen de détection associé (18) sont détectées en balayant séquentiellement une pluralité de premières électrodes (X₁ à X₄₀) et une pluralité de secondes électrodes (Y₁ à Y₈) perpendiculaires auxdites premières électrodes (X₁ à X₄₀) et une période d'affichage (B) pendant laquelle une image est affichée sur ledit panneau d'affichage (11) à une position correspondant à la position détectée dans la période de détection de coordonnées, ladite période de détection de coordonnées (A) comprenant une période de détection de coordonnées x (Aₓ) pendant laquelle lesdites premières électrodes (X₁ à X₄₀) sont balayées et une période de détection de coordonnées y (A_{y}) pendant laquelle lesdites secondes électrodes (Y₁ à Y₈) sont balayées, et dans laquelle ledit moyen pour supprimer un bruit électrostatique comprend un moyen de commande (17) pour commander ledit moyen d'application de tension (61, 62, 63, 64, 65) de telle manière que ladite source d'émission de lumière (60) est désactivée seulement pendant la période de détection de coordonnées y (A_{y}) lorsque les secondes électrodes (Y₁ à Y₈) sont des électrodes inférieures telles que vues par lesdits moyens d'indication (18), et que ladite source d'émission de lumière (60) est désactivée seulement pendant la période de détection de coordonnées x (Aₓ) si les premières électrodes (X₁ à X₄₀) sont les électrodes inférieures.
